(19) Europäisches Patentamt
European Patent Office
Office européen des brevets

(11) **EP 4 657 154 A1**

(12) **EUROPEAN PATENT APPLICATION**

(43) Date of publication:
**03.12.2025 Bulletin 2025/49**

(21) Application number: **25178178.7**

(22) Date of filing: **22.05.2025**

(51) International Patent Classification (IPC):
**G03B 21/20** (2006.01)  **G03B 33/08** (2006.01)
**G02B 26/00** (2006.01)  **H04N 9/31** (2006.01)

(52) Cooperative Patent Classification (CPC):
**G03B 21/206; G02B 26/008; G03B 21/208;
G03B 33/08; H04N 9/3114; H04N 9/3158;
H04N 9/3164;** G03B 21/204

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.05.2024 JP 2024085776
04.03.2025 JP 2025033966**

(71) Applicant: **Ricoh Company, Ltd.
Tokyo 143-8555 (JP)**

(72) Inventors:
• **NAKAMURA, Kasumi
Tokyo, 143-8555 (JP)**
• **SATO, Osamu
Tokyo, 143-8555 (JP)**
• **FUJITA, Kazuhiro
Ohta-ku,Tokyo, 143-8555 (JP)**

(74) Representative: **SSM Sandmair
Patentanwälte Rechtsanwalt
Partnerschaft mbB
Joseph-Wild-Straße 20
81829 München (DE)**

(54) **COLOR WHEEL, LIGHT SOURCE DEVICE, AND PROJECTION APPARATUS**

(57) A color wheel (20) includes a first filter group (21) including first multiple color filters having different light transmittances and a second filter group (22) including second multiple color filters having light transmittances equivalent to the different light transmittances of the first multiple color filters, respectively. The first multiple color filters include a first color filter having a first light transmittance. The second multiple color filters include a second color filter having a second light transmittance equivalent to the first light transmittance. The first color filter is adjacent to the second color filter. The first multiple color filters have first areas or first central angles unequal to each other in the first filter group. The second multiple color filters have second areas or second central angles unequal to each other in the second filter group and respectively equivalent to the first areas or the first central angles.

FIG. 5

**Description**

BACKGROUND

Technical Field

The present disclosure relates to a color wheel, a light source device including the color wheel, and a projection apparatus including the color wheel.

Related Art

In projectors using a digital light processing method, the following technique has been used. A color wheel includes color filters having various transmittance characteristics. The color filters are arranged in an annular configuration. When the color wheel is rotated, light is transmitted through the color wheel to output lights of colors such as red, blue, green, and yellow in a time-division manner (e.g., Japanese Unexamined Patent Application Publication No. 2023-099536, Japanese Patent No. 6205835, Japanese Patent No. 4281385, and U.S. Patent No. 10634901).

When the color wheel is used, the color wheel is typically rotated continuously, and one frame is generated per rotation. A time interval during which light is simultaneously incident on a boundary between adjacent different color filters of the color wheel is referred to as a spoke time. During the spoke time, the colors of multiple color filters are mixed, resulting in a reduction in the color purity of light, and such light is difficult to handle as light of a pure color.

When the spoke time increases, for example, coloring performance deteriorates due to the decrease in color purity, and the brightness of the projector decreases due to the inability to use the color light of the boundary portion. Thus, the spoke time is preferably reduced.

For an image projection apparatus with such a color wheel, in order to, for example, increase the frame rate or upscale to a pseudo-4K to enhance the image quality, the number of divided color filters (i.e., the number of segments) on the color wheel is doubled to generate two frames per rotation. However, when the number of segments of the color wheel is doubled, the spoke time is also doubled.

The combination of a laser light source and a phosphor module may be used as illumination light sources to obtain the brightness of the projector. In this configuration, two spots are positioned side by side on the color wheel, which may further increase the spoke time. Even with a light source system including one light source, the spoke time may also be increased when the spot on the color wheel has a large diameter, in particular, when the spot extends in a spoke scanning direction.

SUMMARY

The present disclosure has been made to solve the above situations, and an object of the present disclosure is to provide a color wheel that increases the number of segments of a color filter and reduces a spoke time to enhance color purity.

The present disclosure described herein provides an improved color wheel including a first filter group and a second filter group. The first filter group includes first multiple color filters having different light transmittances. The second filter group includes second multiple color filters having light transmittances equivalent to the different light transmittances of the first multiple color filters of the first filter group, respectively. The first multiple color filters of the first filter group and the second multiple color filters of the second filter group are arranged in a circumferential direction of the color wheel. The first multiple color filters of the first filter group include a first color filter having a first light transmittance. The second multiple color filters of the second filter group include a second color filter having a second light transmittance equivalent to the first light transmittance. The first color filter is adjacent to the second color filter on the color wheel in the circumferential direction. The first multiple color filters have first areas or first central angles unequal to each other in the first filter group. The second multiple color filters have second areas or second central angles unequal to each other in the second filter group. The second areas or the second central angles are respectively equivalent to the first areas or the first central angles of the first multiple color filters of the first filter group.

According to one aspect of the present disclosure, the color purity can be enhanced by reducing the spoke time while increasing the number of segments of the color filter.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a diagram illustrating a configuration of an image projection apparatus;
FIG. 2 is a block diagram illustrating a configuration of a controller of an image projection apparatus;
FIG. 3 is a schematic diagram of a light source device;
FIG. 4 is a diagram illustrating a configuration of a wavelength converter of the light source device illustrated in FIG. 3;
FIG. 5 is a diagram illustrating a segment configuration of a color wheel of the light source device illustrated in FIG. 3;
FIG. 6 is a diagram illustrating a segment configuration of a color wheel according to a comparative example;

FIG. 7 is a schematic diagram illustrating the concept of a spoke time of a color wheel;

FIG. 8 is a diagram illustrating a segment configuration of the color wheel illustrated in FIG. 5, according to a first modification;

FIG. 9 is a diagram illustrating a segment configuration of the color wheel illustrated in FIG. 5, according to a second modification;

FIG. 10 is a diagram illustrating a segment configuration of the color wheel illustrated in FIG. 5, according to a third modification;

FIG. 11 is a diagram illustrating a segment configuration of the color wheel illustrated in FIG. 5, according to a fourth modification;

FIG. 12 is a diagram illustrating a configuration of a light source device including two light sources;

FIG. 13 is a diagram illustrating transmitted light beams through a color wheel of the light source device illustrated in FIG. 12;

FIG. 14 is a diagram illustrating two incident light beams positioned in a radial direction of a color wheel of the light source device illustrated in FIG. 12;

FIG. 15 is a schematic diagram illustrating incident positions of transmitted light beams and optical axes to depict the effect of the incident positions;

FIG. 16 is a schematic diagram illustrating a positional relationship between the incident positions of the transmitted light beams illustrated in FIG. 15 and a color wheel;

FIGS. 17A and 17B are diagrams illustrating a relationship between an effective period and a central angle of a color filter on the color wheel illustrated in FIG. 6, according to the comparative example;

FIG. 18 is a diagram illustrating a configuration of a color wheel in which the number of color filters in the configuration illustrated in FIGS. 17A and 17B is increased to eight;

FIG. 19 is a diagram illustrating an arrangement of segments on a color wheel;

FIGS. 20A, 20B, and 20C are diagrams illustrating a rotation of the color wheel illustrated in FIG. 19 and an effective period;

FIG. 21 is a diagram illustrating a method of calculating a spot diameter;

FIG. 22 is an enlarged diagram illustrating a configuration of a spot diameter; and

FIGS. 23A and 23B are diagrams each illustrating a method of calculating a shape of a spot diameter based on a light intensity.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

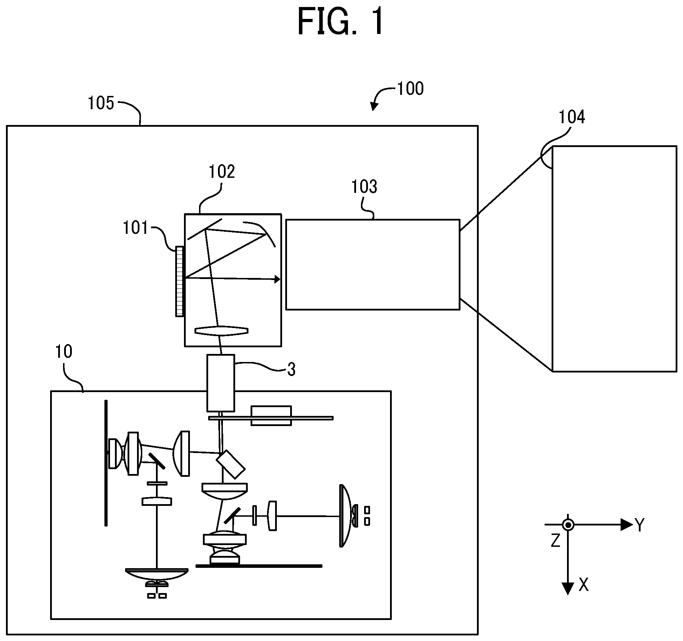

FIG. 1 is a diagram of a configuration of an image projection apparatus 100 including a light source device 10. The image projection apparatus 100 includes the light source device 10 serving as an illumination device, a digital micromirror device (DMD) 101 serving as a spatial light modulator for modulating an illumination light beam generated by the light source device 10, an illumination optical system 102 for substantially homogenizing a light beam emitted from the light source device 10 and guiding the light beam to the DMD 101, and a projection optical system 103 for enlarging and projecting the light beam spatially modulated by the DMD 101 to a projection surface 104. The image projection apparatus 100 generates a projection image on the projection surface 104 by the configuration described above.

The DMD 101 is a two-dimensional light modulator that adds image data to the light beam emitted from the light source device 10 by reflecting the light beam incident on the surface of micromirrors arranged on the surface of the DMD 101. The DMD 101 is used as the two-dimensional light modulator as illustrated in FIG. 1, but a transmissive liquid crystal element or a reflective liquid crystal element may be used.

The projection optical system 103 is located downstream from the DMD 101 in an optical path and is designed to project the light beams toward the projection surface 104, which serves as a screen. The illumination optical system 102 guides the illumination light beam from the light source device 10 toward the DMD 101. The projection optical system 103 and the illumination optical system 102 include optical elements including lenses and mirrors, and are incorporated in a housing 105 of the image projection apparatus 100.

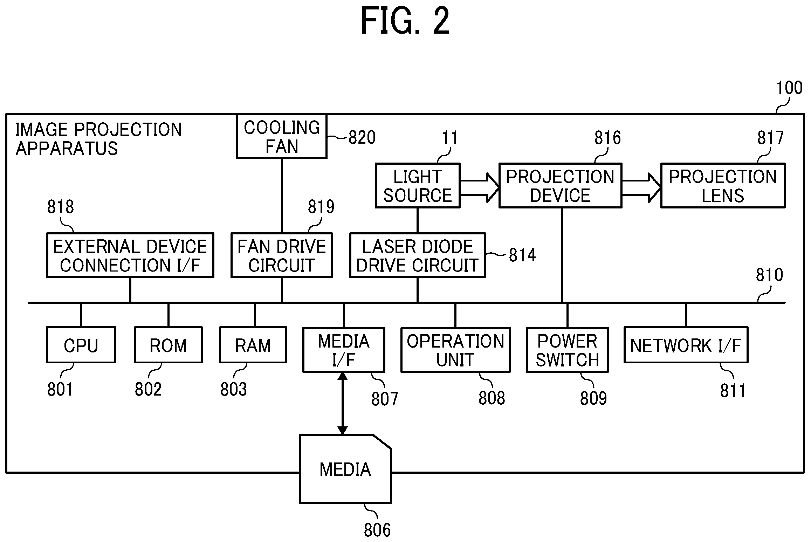

FIG. 2 is a diagram of a hardware configuration of a controller of the image projection apparatus 100. The image projection apparatus 100 includes a central processing unit (CPU) 801, a read-only memory (ROM) 802, a random-access memory (RAM) 803, a media interface (I/F) 807, an operation unit 808, a power switch 809, a bus line 810, a network interface (I/F) 811, a laser diode (LD) drive circuit 814, a light source 11, a projection device 816, a projection lens 817, an external device connection interface (I/F) 818, a fan drive circuit 819, and a cooling fan 820.

The CPU 801 controls the overall operation of the image projection apparatus 100. The ROM 802 stores a program used to drive the CPU 801. The RAM 803 is used as a work area of the CPU 801. The media I/F 807 controls media 806 such as a flash memory to read or write (store) data.

The operation unit 808 includes various keys, buttons, and light-emitting diodes (LEDs), and is used to perform various operations other than ON and OFF (ON/-OFF) of a power supply of the image projection apparatus 100 by a user. For example, the operation unit 808 receives instruction operations such as an adjustment of the size of the projection image, an adjustment of a color tone, a focus adjustment, and a keystone adjustment, and outputs the received operation to the CPU 801.

The power switch 809 is a switch used to turn the power of the image projection apparatus 100 ON and OFF. The bus line 810 is an address bus or a data bus to electrically connect components such as the CPU 801. The network I/F 811 is an interface for performing data communication using a communication network such as the Internet.

The LD drive circuit 814 controls the turning on and off of the light source 11 under the control of the CPU 801. When the light source 11 is turned on under the control of the LD drive circuit 814, the light source 11 emits a projection light beam to the projection device 816. The light source 11 includes, for example, a light emitting element such as a laser diode (LD) module or a light-emitting diode (LED) module, or a solid light source element to construct a light source unit.

The projection device 816 is a control driver that operates the DMD 101 using a spatial light modulation method based on image data given via, for example, the external device connection I/F 818. The LD drive circuit 814, the light source 11, the projection device 816, and the projection lens 817 work as a projection unit (a projection method) as a whole to project the projection image on the projection surface 104 based on image data. The external device connection I/F 818 is directly connected to a personal computer (PC) to exchange control signals and image data between the PC and the external device connection I/F 818.

The fan drive circuit 819 is connected to the CPU 801 and the cooling fan 820, and operates or stops the cooling fan 820 based on a control signal from the CPU 801. The cooling fan 820 is rotated to exhaust the air inside the image projection apparatus 100 so as to cool the inside of the image projection apparatus 100.

When electric power is supplied to the image projection apparatus 100, the CPU 801 is activated according to a control program preinstalled in the ROM 802, and sends a control signal to the LD drive circuit 814 to turn on the light source 11 and also sends a control signal to the fan drive circuit 819 to rotate the cooling fan 820 at a rated speed. In the image projection apparatus 100, when a power circuit starts supplying the electric power, the projection device 816 is ready to display an image. Further, the power circuit supplies the electric power to other various components.

In the image projection apparatus 100, when the power switch 809 is turned off, a power OFF signal is sent from the power switch 809 to the CPU 801. When the CPU 801 detects the power OFF signal, the CPU 801 sends a control signal to the LD drive circuit 814 to turn off the light source 11. After a predetermined time has elapsed, the CPU 801 sends a control signal to the fan drive circuit 819 to stop the cooling fan 820. The CPU 801 then concludes its own control processing and finally instructs the power circuit to stop supplying the electric power.

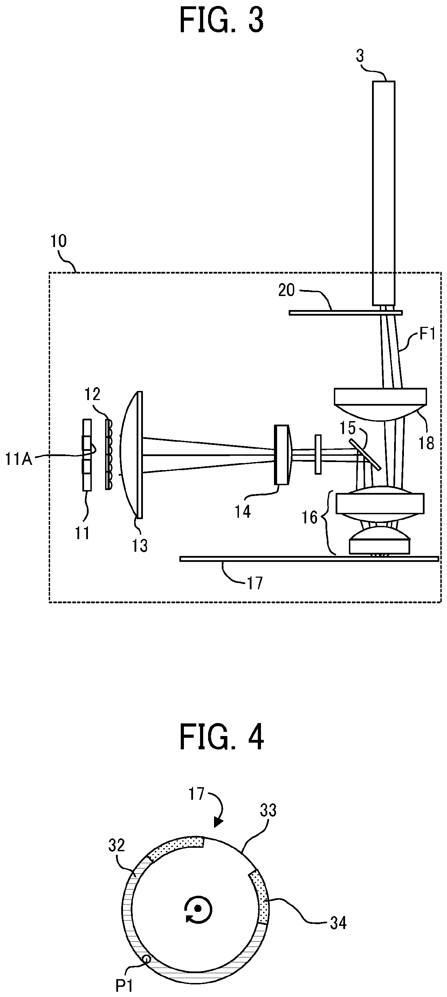

As illustrated in FIG. 3, the light source device 10 serves as a light source module that makes light incident on a light tunnel 3 to function as an illumination device to obtain a uniform illumination light beam. The light tunnel 3 is a light homogenizer.

The light source device 10 includes the light source 11 as a laser light source, which is a light source of excitation light, a collimator lens array 12 facing the light source 11, a light-source optical system 13, a light condensing element 14, a dichroic mirror 15, a wavelength converter 17, a first condensing optical system 16, and a second condensing optical system 18.

The light tunnel 3 is disposed at a terminal end of the light source device 10 and functions as a light mixing element (i.e., a light mixing tunnel) for homogenizing light emitted from the light source 11 and outputting an illumination light beam having a uniform illuminance and intensity distribution.

The light source 11 is a laser light source and includes a multichip laser diode unit in which multiple light emitting portions 11A are arranged on a two-dimensional plane. The collimator lens array 12 is disposed at a position facing the light emitting portions 11A to convert excitation light beams emitted from the light emitting portions 11A into parallel light beams. The light-source optical system 13 is a lens designed to converge (or collect and concentrate) the excitation light beams converted into parallel light beams by the collimator lens array 12.

The center of the light source 11 typically coincides with the optical axis of the excitation light beams emitted from the light source 11. Thus, the light-source optical system 13 is disposed such that the center of the light source 11 and the position of the optical axis of the light-source optical system 13 are aligned with each other. The excitation light beams emitted from the light source 11 are preferably blue laser light having an emission oscillation wavelength in the range from 440 nm to 465 nm.

The light condensing element 14 is a lens arranged downstream of the light-source optical system 13. In light beams transmitted through the light condensing element 14 (i.e., transmitted light beams), only a portion of the transmitted light beams having a specific wavelength is reflected by the dichroic mirror 15 (i.e., reflected light beams), and the reflected light beams generate an irradiation spot P1 (see FIG. 4) at a desired position on the wavelength converter 17 by the first condensing optical system 16. In other words, the wavelength converter 17 is disposed near the irradiation spot P1 (first irradiation spot). The irradiation spot P1 is an irradiation region having a certain area, and the position of the irradiation spot P1 substantially coincides with the focal position of the first condensing optical system 16.

The wavelength converter 17 is a disk-shaped phosphor wheel (a phosphor wheel) as illustrated in FIG. 4. The wavelength converter 17 is attached to a drive motor and rotated at a high speed to move the position of the irradiation spot P1 on the circumference of the wavelength converter 17 with time.

In FIG. 4, the wavelength converter 17 has a first phosphor region 32 coated with a yellow phosphor, an excitation light reflection region 33 that reflects the excitation light, and a second phosphor region 34 coated with a green phosphor. The irradiation spot P1 is located in any one of the first phosphor region 32, the second phosphor region 34, and the excitation light reflection region 33 by the rotation of the wavelength converter 17.

In FIG. 4, the wavelength converter 17 is divided into three regions. Alternatively, the first phosphor region 32 and the second phosphor region 34 may be handled as one phosphor region, or the wavelength converter 17 may include two or more regions. Multiple excitation light reflection regions 33 may be disposed on the wavelength converter 17.

With this configuration, for example, in the case where blue light with emission intensity having a center wavelength of 455 nm is used as the excitation light emitted from the light source 11, the wavelength converter 17 outputs blue light when the irradiation spot P1 is located in the excitation light reflection region 33, outputs yellow fluorescent light when the irradiation spot P1 is located in the first phosphor region 32, and outputs green fluorescent light when the irradiation spot P1 is located in the second phosphor region 34.

Accordingly, the wavelength converter 17 can emit light beams having multiple wavelengths in a time-division manner while rotating.

The light beams reflected from the wavelength converter 17 pass through the first condensing optical system 16 again and are converged by the second condensing optical system 18. After that, the light beams pass through a color wheel 20 and are incident on the light tunnel 3. Since fluorescent light passes through the dichroic mirror 15, fluorescent light emitted to the first phosphor region 32 and the second phosphor region 34 of the wavelength converter 17 also passes through the first condensing optical system 16 and the second condensing optical system 18 and is incident on the light tunnel 3 after passing through the color wheel 20.

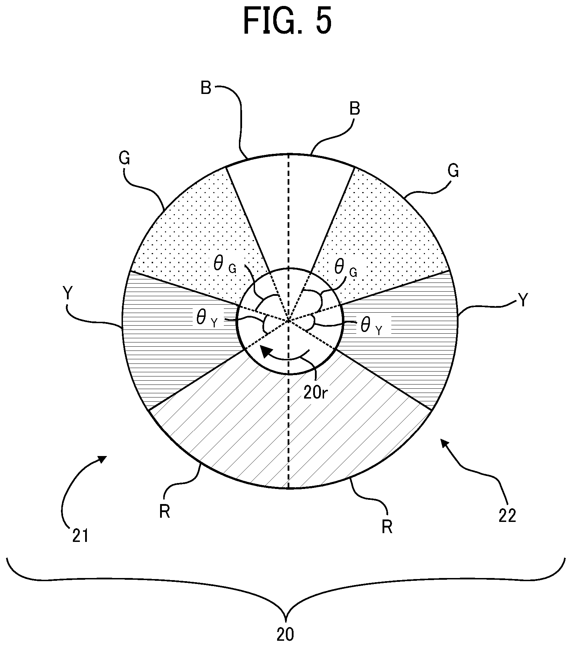

As illustrated in FIG. 5, the color wheel 20 is a disk of color filters. The color filters are divided into segments such as a red region R, a blue region B, a green region G, and a yellow region Y, which are integrated into a single disk. The color wheel 20 is an optical component. Incident light beams F1 from the second condensing optical system 18 pass through the color wheel 20, which is rotating, to convert transmitted light beams into time-divided light beams of red, blue, green, and yellow.

The blue region B corresponds to the excitation light reflection region 33 of the phosphor wheel of the wavelength converter 17 illustrated in FIG. 4, and the yellow region Y, the red region R, and the green region G are synchronized such that the yellow region Y and the red region R correspond to the first phosphor region 32 and the green region G corresponds to the second phosphor region 34 of the wavelength converter 17 illustrated in FIG. 4.

A transmissive diffuser may be disposed in the blue region B to reduce the coherence of the light source 11. As a result, speckles on the projection surface 104 can be reduced. The wavelength ranges of yellow fluorescent light and green fluorescent light emitted from the first phosphor region 32 and the second phosphor region 34 pass through the yellow region Y and the green region G, respectively. The red region R reflects light in an undesired wavelength range from the yellow fluorescent light by using a dichroic mirror to obtain light having high color purity.

In the light tunnel 3, color light having enhanced color purity is repeatedly reflected and superimposed at internal interfaces. Accordingly, the color light is homogenized. The light tunnel 3 has an opening with an aspect ratio substantially equal to the aspect ratio of the DMD 101 serving as an image forming element. The light emitted from the exit of the light tunnel 3 is projected onto the DMD 101 as an illumination light beam, as illustrated in FIG. 1.

As described above, time-divided light beams of the respective colors are generated by the wavelength converter 17 and the color wheel 20. The time-divided light beams of the respective colors are guided to the DMD 101 through the illumination optical system 102 to form images corresponding to the respective colors, and the images are enlarged and projected onto the projection surface 104 by the projection optical system 103.

The color wheel 20 includes a first filter group 21 and a second filter group 22. In the first filter group 21, segments of the red region R, the yellow region Y, the green region G, and the blue region B each having a fan shape are arranged in a semicircle. In the second filter group 22, segments of the red region R, the yellow region Y, the green region G, and the blue region B each having a fan shape are arranged in a semicircle.

In the first filter group 21, the red region R, the yellow region Y, the green region G, and the blue region B are arranged in this order in the clockwise direction, which is a rotation direction 20r, when viewed from the incident side of the transmitted light beams. In the second filter group 22, by contrast, the blue region B, the green region G, the yellow region Y, and the red region R are arranged in this order in the rotation direction 20r. Thus, the arrangement order of the segments in the second filter group 22 is opposite to that in the first filter group 21.

As described above, a color wheel (e.g., the color wheel 20) includes a first filter group including multiple color filters (i.e., first multiple color filters) having different light transmittances, and a second filter group including multiple color filters having different light transmittances. In other words, the second filter group includes multiple color filters (i.e., second multiple color filters) having light transmittances equivalent to the different light transmittances of the multiple color filters of the first filter group, respectively. The multiple color filters of the first filter group 21 and the multiple color filters of the second filter group 22 are arranged in a circumferential direction of the color wheel 20.

The reason that the two filter groups, i.e., the first filter group 21 and the second filter group 22, are used will be described below.

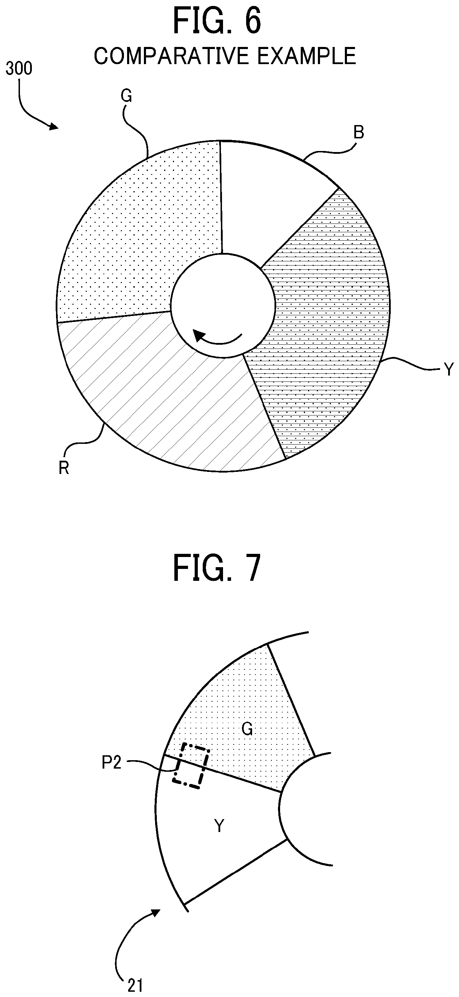

In a color wheel 300 illustrated in FIG. 6, according to a comparative example, the blue region B, the yellow region Y, the red region R, and the green region G are arranged in this order in the clockwise direction in a circle. Four base colors are obtained per rotation in the order of blue, yellow, red, and green in the rotation direction to reproduce colors.

When the color wheel 300 as illustrated in FIG. 6 is used, since one frame is generated per rotation, the rotation speed is increased to increase the frame rate by speeding up each frame or to double the number of frames for the purpose of artificially increasing the resolution. However, the simple increase in the rotation speed has limitations due to constraints related to the response speed of the DMD 101 and the wavelength converter 17 and the durability and accuracy of a rotation driver.

On the other hand, the color wheel 20 including two filter groups each corresponding to the respective colors can generate two frames of images per rotation. As described above, since the color wheel 20 includes multiple filter groups, the same number of frames as the number of filter groups can be generated per rotation. Thus, the number of frames can be doubled without increasing the rotation speed. One frame is generated by either one of the first filter group 21 or the second filter group 22 as the color wheel 20 rotates half a turn.

As illustrated in FIG. 5, the yellow region Y of the first filter group 21 and the yellow region Y of the second filter group 22 have equal areas and equal central angles $\theta_Y$. The same relationship applies to the pairs of green regions G, the pairs of blue regions B, and the pairs of red regions R between the first filter group 21 and the second filter group 22. In other words, the color filters of the color wheel 20 are symmetric with respect to a line segment that separates the first filter group 21 and the second filter group 22.

As described above, the area ratio of the multiple color filters of the first filter group 21 or the angular ratio of the central angles of the multiple color filters of the first filter group 21 is set to be equal to the area ratio of the multiple color filters of the second filter group 22 or the angular ratio of the central angles of the multiple color filters of the second filter group 22.

In other words, each of the multiple color filters of the first filter group 21 has an area or a central angle equivalent to an area or a central angle of a corresponding one of the multiple color filters of the second filter group 22 having an equivalent light transmittance to the each of the multiple color filters of the first filter group 21.

In yet other words, the first multiple color filters have first areas or first central angles unequal to each other in the first filter group, the second multiple color filters have second areas or second central angles unequal to each other in the second filter group, and the second areas or the second central angles are respectively equivalent to the first areas or the first central angles of the first multiple color filters of the first filter group.

Specifically, when the difference between the central angle of a certain color filter in the first filter group 21 and the central angle of a corresponding color filter in the second filter group 22 is within $\pm 5$ degrees, the angular ratio of the central angles in the first filter group 21 and the second filter group 22 can be considered to be substantially equal (equivalent) to each other.

As described above, the light source 11 of the light source device 10 emits a light beam onto the color wheel 20 to project an irradiation spot (may be referred to simply as a spot) of the light beam on the multiple color filters of the color wheel 20 via various optical elements described above.

An irradiation spot P2 (see FIG. 7) on the color wheel 20 has a finite size. More specifically, the irradiation spot P2 on the color wheel 20 has a finite size that falls within the size of the entrance of the light tunnel 3. The irradiation spot P2 (second irradiation spot) may be positioned across adjacent regions, such as the yellow region Y and the green region G, as illustrated in FIG. 7. Such a state is known as a spoke time.

During the spoke time, light transmitted through the color wheel 20 enters the light tunnel 3 while the light has color components of both the yellow region Y and the green region G. As a result, light having low color purity may be used. If such light having low color purity is not used, the use efficiency of light decreases by an amount equal to the spoke time. The output of the light source 11 may be increased to obtain the illuminance of light of each color. However, since the peak of the conversion efficiency of laser light in the first phosphor region 32 and the second phosphor region 34 is limited, the amount of light is not unconditionally increased.

As described above, the spoke time occurs at a location where filters of different colors are adjacent to each other, and is preferably minimized as much as possible. When multiple filter groups are used, a simple arrangement of the multiple filter groups may result in an increase in spoke time.

Accordingly, to reduce the spoke time, the red region R, the green region G, the blue region B, and the yellow region Y of the multiple color filters are arranged in each of the first filter group 21 and the second filter group 22 in the following pattern. In the first filter group 21, the red region R, the yellow region Y, the green region G, and the blue region B are arranged in this order in the clockwise direction, which is the rotation direction 20r. In the second filter group 22, by contrast, the blue region B, the green region G, the yellow region Y, and the red region R are arranged in this order in the rotation direction 20r. Thus, the arrangement order of the multiple color filters in the second filter group 22 is opposite to that in the first filter group 21.

With this configuration, color filters having the same or similar light transmittances are adjacent to each other at each end of the first filter group 21 and the second filter group 22. Specifically, the red region R of the first filter group 21 and the red region R of the second filter group 22 are adjacent to each other, and the blue region B of the first filter group 21 and the blue region B of the second filter group 22 are adjacent to each other. Thus, the increase in spoke time is limited. In other words, the multiple color filters of the first filter group include a first color filter having a first light transmittance, the multiple color filters of the second filter group include a second color filter having a second light transmittance equivalent to the first light transmittance, and the first color filter is adjacent to the second color filter on the color wheel in the circumferential direction,

With this configuration, the spoke time is reduced for some colors and is not reduced for other colors. For example, in the red regions R and the blue regions B, the spoke time can be reduced, and thus the color purity may increase, resulting in uneven color intensity. The uneven color intensity may also be caused by a difference in emission characteristics or light quantity on the wavelength converter 17.

Accordingly, as illustrated in FIG. 5, the multiple color filters arranged in each of the first filter group 21 and the second filter group 22 are set to have different areas or different central angles for different colors. In other words, the multiple color filters have areas or central angles unequal to each other in each of the first filter group and the second filter group.

For example, in FIG. 5, the area of the yellow region Y of the first filter group 21 is different from the area of the green region G of the first filter group 21. Similarly, the central angle $\theta_Y$ of the yellow region Y of the first filter group 21 is different from the central angle $\theta_G$ of the green region G of the first filter group 21.

This configuration can even out the uneven color intensity caused by the arrangement of the filters of the color wheel 20. Thus, this configuration is likely to obtain sufficient illuminance of the illumination light beam emitted from the light source device 10 and contributes to even illuminance.

While the color wheel 20 having the arrangement the filters as illustrated in FIG. 5 has been described above, the arrangement of the filters, namely, the red regions R, the yellow regions Y, the green regions G, and the blue regions B, on the color wheel 20 is not limited to the configuration described above, and various modifications may be made, as described below.

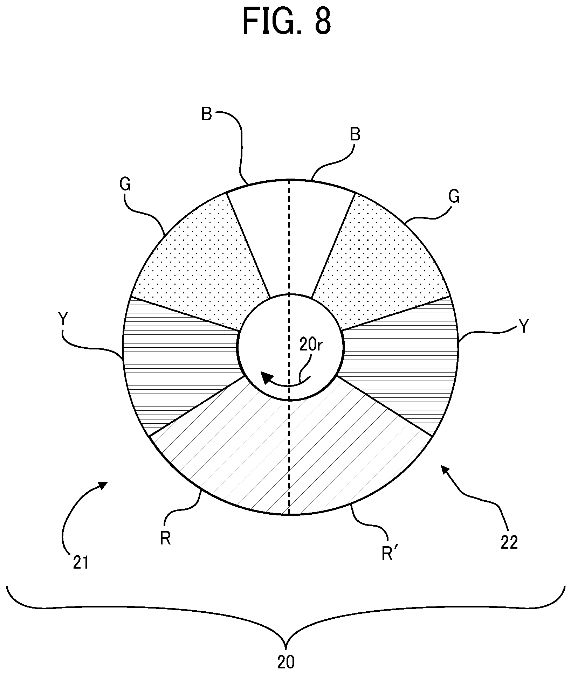

FIG. 8 illustrates a modification of the arrangement of the filters of FIG. 5. In FIG. 8, the red region R of the first filter group 21 and a red region R' of the second filter group 22 have different wavelength characteristics. Preferably, the different wavelength characteristics that do not affect the coloring and gradation of a projected image are allowable. For example, when the red region R of the first filter group 21 has a cutoff wavelength of 600 nm and the red region R' of the second filter group 22 has a cutoff wavelength in the range of 600 nm $\pm$ 20 nm, the red region R of the first filter group 21 and the red region R' of the second filter group 22 have different (but similar) wavelength characteristics while reducing the spoke time.

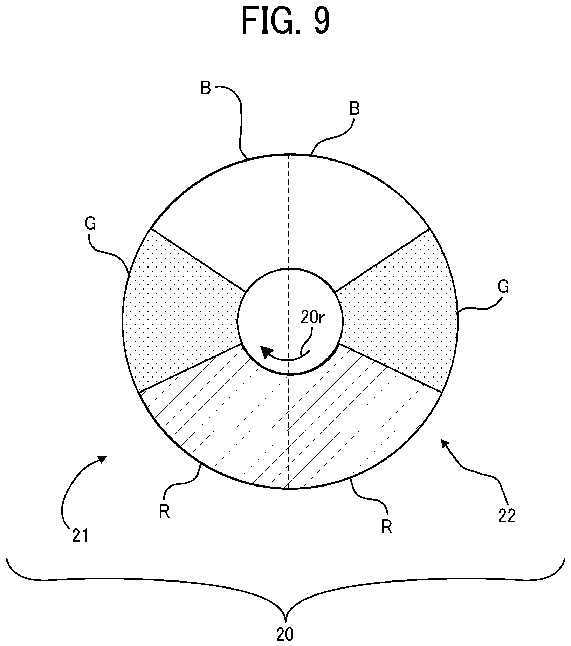

FIG. 9 illustrates a modification of the arrangement of the filters of the color wheel 20. The color wheel 20 illustrated in FIG. 9 includes three colors, namely, the red region R, the green region G, and the blue region B, in order to produce a more vivid image with primary colors. As described above, even when the color wheel 20 includes three or more segments with wavelength characteristics, the number of segments of the color filters can be increased while reducing the spoke time to increase color purity.

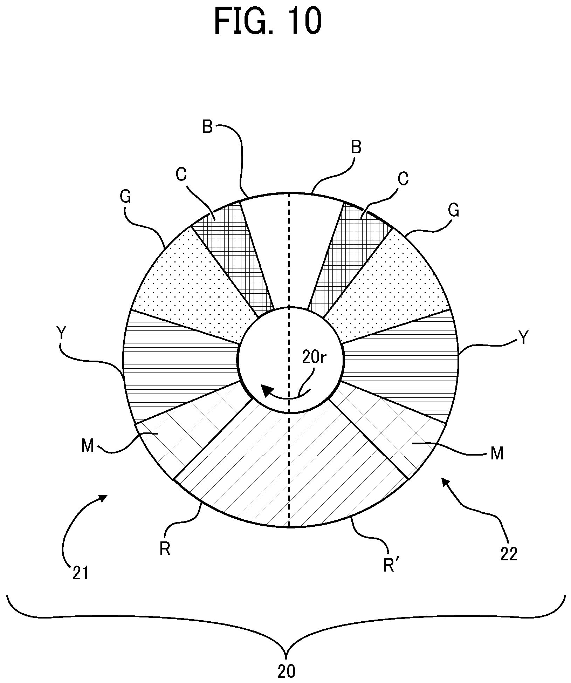

In another modification, as illustrated in FIG. 10, the color wheel 20 may include more segments. For example, the color wheel 20 may further include a cyan region C and a magenta region M. In FIG. 10, in the first filter group 21, the segments of the color filters are formed in the order of the red region R, the magenta region M, the yellow region Y, the green region G, the cyan region C, and the blue region B in the rotation direction 20r. In the second filter group 22, the segments of the color filters are formed in the order of the blue region B, the cyan region C, the green region G, the yellow region Y, the magenta region M, and the red region R' in the rotation direction 20r.

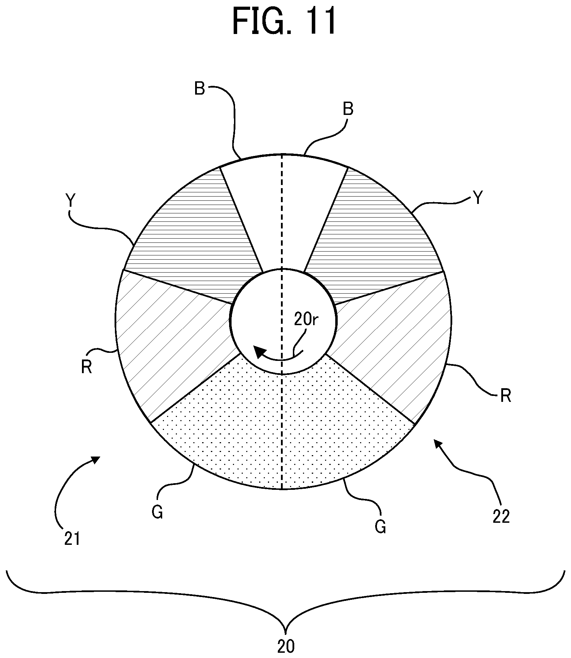

In another modification, as illustrated in FIG. 11, the segments of the color filters in each of the first filter group 21 and the second filter group 22 may be arranged in such an order that the blue regions B of the first filter group 21 and the second filter group 22 are adjacent to each other and the green regions G of the first filter group 21 and the second filter group 22 are adjacent to each other.

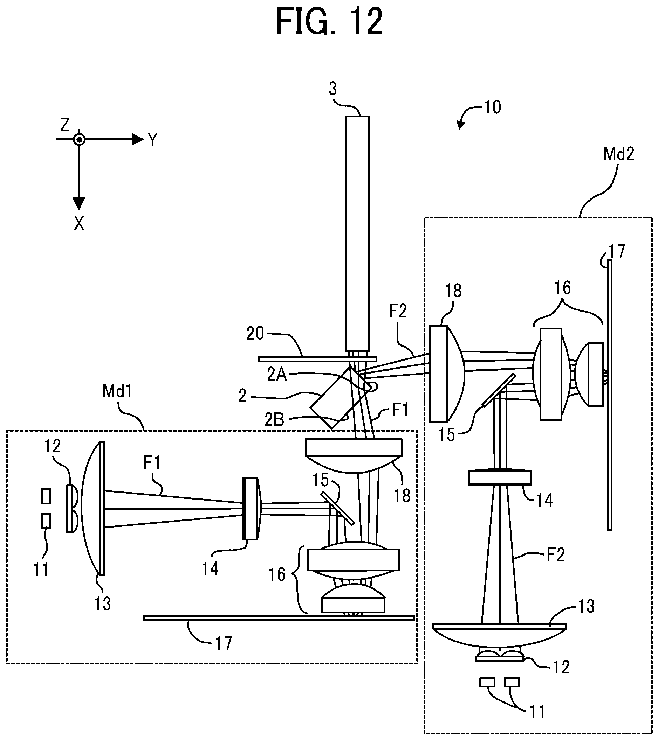

A description is given below of a light source device 10 including a first light source unit Md1 and a second light source unit Md2 as two light source modules. In the following description, like components in common with the above description are denoted by like reference numerals as those in the above description, and a description thereof will be omitted as appropriate. A direction orthogonal to the surface of paper on which FIG. 12 is drawn is referred to as a Z direction, an X direction is orthogonal to the Z direction in the vertical direction in FIG. 12, and a Y direction is orthogonal to the X direction and the Z direction (i.e., the horizontal direction in FIG. 12).

As illustrated in FIG. 12, the light source device 10 includes two light source units, i.e., the first light source unit Md1 and the second light source unit Md2. The light source device 10 is a device that combines light beams emitted from the first light source unit Md1 and the second light source unit Md2, which are different light sources, using a prism 2 and makes the combined light beam incident on the light tunnel 3, which is a light homogenizer, to extract a uniform illumination light beam.

The prism 2 is an optical element for guiding a first light beam F1 from the first light source unit Md1 in the same direction as a second light beam F2 from the second light source unit Md2. The prism 2 is a polyhedron having four or more facets. The first light beam F1 from the first light source unit Md1 enters the prism 2 through a facet 2B (i.e., a transmission surface) and emerges from the prism 2 through a facet 2A. The second light beam F2 from the second light source unit Md2 is incident on and reflected from the facet 2A (i.e., a reflection surface).

The prism 2 is an element for combining and guiding the light beams from two or more light source units in substantially the same direction. The prism 2 is not limited to the element or the configuration described above, and may have more facets for combining light beams from three or more light source units. The facet 2A (i.e., the reflection surface) may be, for example, a surface formed on a slope of a triangular prism, or a flat mirror formed on one side of the triangular prism.

In FIG. 12, at least two light source units are used. When an illumination device includes two light source units, for example, as illustrated in FIG. 12, the first light source unit Md1 is used as one light source unit and the second light source unit Md2 is used as another light source unit. A description is given below of the first light source unit Md1 and the second light source unit Md2 as two of at least two light source units.

In addition to the two light source units, other light source units such as a third light source unit and a fourth light source unit may be used, and such additional light source units may be light source units that emit light beams of a single color or light beams of multiple wavelengths, rather than light sources that use phosphor wheels. In another example, the additional light source units such as a third light source unit and a fourth light source unit other than the two light source units may be attached to the exterior of the housing of the light source device 10.

The prism 2 may also have, for example, a diffusing surface. Such a diffusing surface can eliminate unevenness in color and luminance of a light beam passing through the diffusing surface. To eliminate such unevenness in color and luminance, a separate diffusion plate may be used, and the configuration is not limited to the diffusing surface.

The prism 2 reflects the second light beam F2 from the second light source unit Md2 in the configuration described above, and guides the second light beam F2 to the light tunnel 3 (i.e., a light homogenizer) in substantially the same direction as the first light beam F1 from the first light source unit Md1. The first light beam F1 passes through the prism 2.

The light tunnel 3 functions as a light mixing element that homogenizes incident light beams and outputs an illumination light beam in which the illuminance and intensity distribution of the light beams F1 and F2 from the light source units Md1 and Md2 are homogenized.

The emission positions of the prism 2 are adjusted so that both the light beam F1 from the first light source unit Md1 and the light beam F2 from the second light source unit Md2 are incident on the light tunnel 3 within the range of acceptable incident angles of the light tunnel 3 at an incident position of the light tunnel 3.

The first light source unit Md1 and the second light source unit Md2 have substantially the same configuration. Each of the first light source unit Md1 and the second light source unit Md2 has the same components as those in the above-described configuration illustrated in FIG. 3. Such components are denoted by the same or similar numerals as those in the above-described configuration, and a description thereof will be omitted as appropriate.

Similarly to the above-described configuration of FIG. 3, the light beams reflected from the wavelength converter 17 pass through the first condensing optical system 16 again and are collected by the second condensing optical system 18. After that, the light beam F1 from the first light source unit Md1 passes through the prism 2, and the light beam F2 from the second light source unit Md2 is reflected from the facet 2A (i.e., the reflection surface). Thus, the light beams F1 and F2 pass through the color wheel 20 and are incident on the light tunnel 3.

Alternatively, the light beam F1 from the first light source unit Md1 bypasses the prism 2, for example, by passing on the near side or the far side of the prism 2 with respect to the surface of the paper on which FIG. 12 is drawn in the Z direction and is incident on the light tunnel 3 directly after passing through the color wheel 20. The light beam F1 from the first light source unit Md1 is not limited to bypassing the prism 2, and part or all of the light beam F1 may instead pass through the prism 2.

As in the configuration of FIG. 3, the color wheel 20 is a disk including the filters of the red regions R, the blue regions B, the green regions G, and the yellow regions Y, which are integrated in one component (one body). The incident light beams F1 and F2 from the light source units Md1 and Md2 pass through the color wheel 20, which is rotating, to convert the incident light beams F1 and F2 into time-divided beams of red, blue, green, and yellow.

As described above, time-divided light beams of the respective colors are generated by the wavelength converter 17 and the color wheel 20. The time-divided light beams of the respective colors are guided to the DMD 101 through the illumination optical system 102 to form images corresponding to the respective colors, and the images are enlarged and projected onto the projection surface 104 by the projection optical system 103.

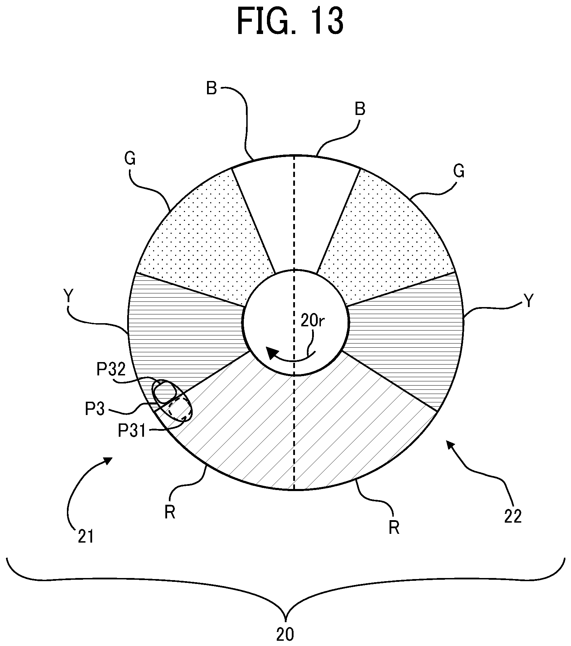

With the configuration illustrated in FIG. 12, the color wheel 20 is irradiated with the light beam F1 from the first light source unit Md1 and the light beam F2 from the second light source unit Md2 to form a third irradiation spot P3 (i.e., a combined spot) as illustrated in FIG. 13. In FIG. 13, in the third irradiation spot P3, an irradiation spot P31 indicated by a broken line is formed by the light beam F1, and an irradiation spot P32 indicated by a solid line is formed by the light beam F2.

The third irradiation spot P3 is a virtually defined irradiation area that includes the irradiation spots P31 and P32. The third irradiation spot P3 is substantially in the shape of either a rectangle enclosing the irradiation spots P31 and P32 or an ellipse having focal points at the positions of the center of gravity of the irradiation spots P31 and P32 from the first light source unit Md1 and the second light source unit Md2, respectively. In FIG. 13, the third irradiation spot P3 is a "virtual ellipse that encompasses two incident light beams (i.e., the irradiation spots P31 and P32)."

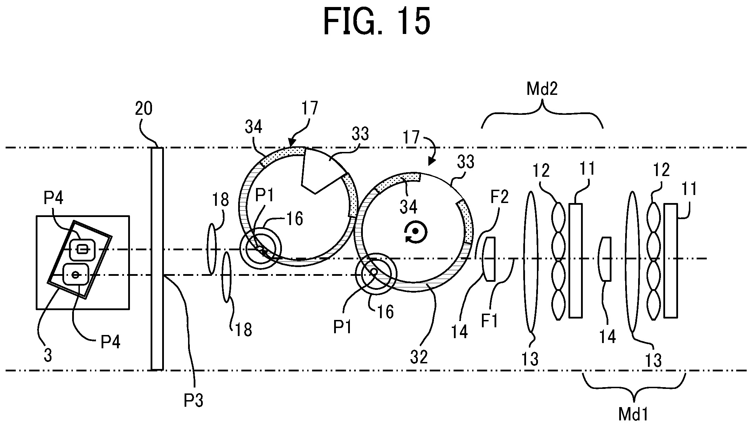

The light tunnel 3 is an optical component that homogenizes the illuminance of light incident on the entrance of the light tunnel 3 and guides the light with homogenized illuminance toward an exit of the light tunnel 3. Accordingly, in order to achieve uniform illuminance at the entrance of the light tunnel 3 in a wide area as possible, preferably, fourth irradiation spots P4 (see FIG. 15) of the light beams F1 and F2 at the entrance of the light tunnel 3 do not overlap each other. In other words, preferably, the irradiation spots P31 and P32 of the third irradiation spot P3 on the color wheel 20 in the previous stage also do not overlap each other.

In the comparative example, typically, the first light source unit Md1 and the second light source unit Md2 are arranged horizontally with respect to the X direction, which is the longitudinal direction of the light tunnel 3, to combine the light beams F1 and F2 from the two light source units Md1 and Md2.

Accordingly, in the comparative example, the first light source unit Md1 and the second light source unit Md2 are arranged at different positions with a gap therebetween in the Z direction (i.e., the height direction) in order to form the fourth irradiation spots P4 that do not overlap each other.

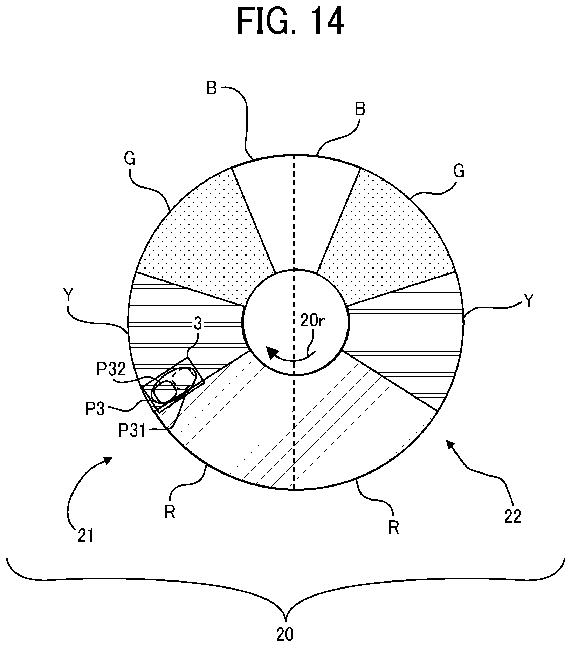

If the first light source unit Md1 and the second light source unit Md2 are shifted from each other in the Z direction, the irradiation spots P31 and P32 of the third irradiation spot P3 on the color wheel 20 are also shifted from each other in the Z direction. Thus, the third irradiation spot P3 including the irradiation spots P31 and P32 of the two light beams F1 and F2 often has a shape whose major axis lies in the radial direction of the color wheel 20 as illustrated in FIG. 14.

With this arrangement, the irradiation spots P31 and P32 of the two light beams F1 and F2 are positioned in the radial direction of the color wheel 20, thus preventing an unnecessary increase in spoke time. In other words, as illustrated in FIG. 14, when the direction of the major axis of an ellipse encompassing two incident light beams is substantially parallel to the radial direction of the color wheel 20, spoke time is not increased unnecessarily. In FIG. 14, the direction of the major axis of the third irradiation spot P3, which is an ellipse, and the radial direction of the color wheel 20 are considered to substantially parallel to each other when the angle therebetween is within ±10 degrees.

Since the fourth irradiation spots P4 also have the same shape as that of the third irradiation spot P3, the opening serving as the entrance of the light tunnel 3 also has a rectangular shape surrounding the elliptical third irradiation spot P3. The rectangular shape of the entrance of the light tunnel 3 has long sides and short sides. As illustrated in FIG. 14, when the short sides of the opening of the light tunnel 3 are arranged parallel to the circumferential direction of the color wheel 20, an unnecessary increase in spoke time can be prevented even when the multiple light source units Md1 and Md2 are used. The term "parallel," as used herein, may also be defined as the short sides of the opening of the light tunnel 3 being "parallel to the circumferential direction" of the color wheel 20 if the angle therebetween is within ±10 degrees, as described above.

Typically, the size and inclination of the opening of the light tunnel 3 are determined by the size of the illumination optical system 102 or the DMD 101 downstream of the light source device 10. Thus, it may be difficult to arrange the light tunnel 3 such that only a reduction in spoke time is achieved.

To reduce the overall size of the light source device 10 having the configuration described above, the following attempt is made. Since the color wheel 20 and the wavelength converter 17, which is a phosphor wheel, are circular, as the centers of the optical axes of the optical systems of the first light source unit Md1 and the second light source unit Md2 are closer to the centers of the rotation axes of the color wheel 20 and the wavelength converter 17, the thickness of the entire light source device 10 is smaller. Thus, the overall size of the light source device 10 in the Z direction is likely to be reduced.

The attempt to reduce the overall size of the light source device 10 will be described with reference to FIG. 15. FIG. 15 schematically illustrates the optical path, focusing on the optical axes of the first light source unit Md1 and the second light source unit Md2. In FIG. 15, the optical axes are merely illustrated schematically, and no consideration is given to, for example, the positional relationship among the optical elements.

The color wheel 20 is circular like the wavelength converter 17 and has a large area. As illustrated in FIG. 15, the first light source unit Md1 and the second light source unit Md2 are arranged such that the difference between the height of the optical axis of each of the first light source unit Md1 and the second light source unit Md2 in the Z direction and the height of the rotation axis of the color wheel 20 in the Z direction is small. Thus, the size of the light source device 10 in the Z direction is further reduced.

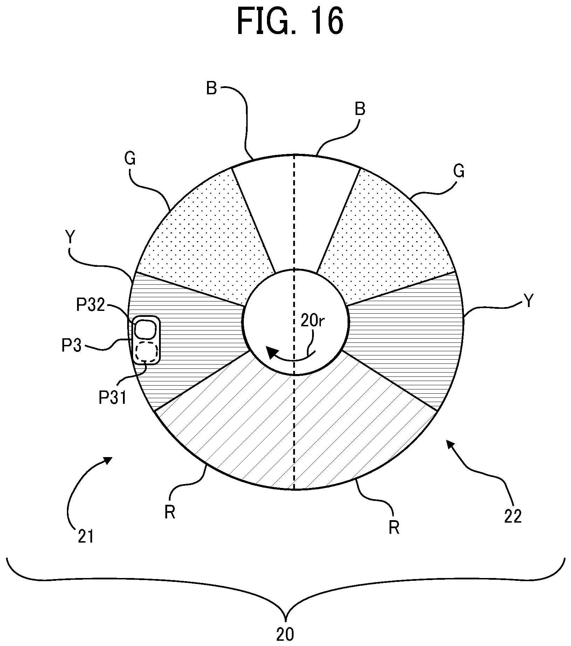

To achieve the arrangement described above and to make the illuminance at the opening of the light tunnel 3 uniform over in a wide area as described above, as illustrated in FIG. 16, the irradiation spot P31 of the light beam F1 from the first light source unit Md1 and the irradiation spot P32 of the light beam F2 from the second light source unit Md2 are preferably positioned to be substantially parallel to the circumferential direction of the color wheel 20.

In other words, the rectangular opening (entrance) having the long sides and the short sides of the light tunnel 3 is arranged such that the long sides of the entrance of the light tunnel 3 extend in the arrangement direction of the irradiation spots P31 and P32, which are light source spot beams, and such that the direction of the long sides is orthogonal to the radial direction of the color wheel 20. Although the illustration of the virtual ellipse is omitted in FIG. 16 for visibility, a virtual ellipse encompassing two incident light beams may be considered in a manner similar to that in FIGS. 13 and 14.

When the irradiation spot P31 of the light beam F1 from the first light source unit Md1 and the irradiation spot P32 of the light beam F2 from the second light source unit Md2 are arranged side by side in the circumferential direction of the color wheel 20, as described above, the spoke time is likely to increase.

To address the issue of the increased spot time, in FIG. 16, the first filter group 21 and the second filter group 22 of the color wheel 20 are arranged such that color filters having the same or similar light transmittances among the multiple color filters arranged in each of the first filter group 21 and the second filter group 22 are adjacent to each other in at least one location. In other words, the multiple color filters of the first filter group include a first color filter having a first light transmittance, the multiple color filters of the second filter group include a second color filter having a second light transmittance equivalent to the first light transmittance, and the first color filter is adjacent to the second color filter on the color wheel in the circumferential direction.

This configuration can prevent the increase in the spoke time of the color wheel 20 using the arrangement of the color filters of the color wheel 20 even when the first light source unit Md1 and the second light source unit Md2 are arranged such that the spoke time is likely to increase due to various restrictions. As described above, even when the direction of the major axis of a virtual ellipse that encompasses two incident light beams is substantially parallel to the circumferential direction of the color wheel 20, the increase in the spoke time of the color wheel 20 can be prevented.

In FIG. 16, among the multiple color filters arranged in each of the first filter group 21 and the second filter group 22, color filters of different colors are set to have unequal areas or central angles. In addition, the area ratio of the multiple color filters of the first filter group 21 or the angular ratio of the central angles of the multiple color filters of the first filter group 21 is set to be substantially equal to the area ratio of the multiple color filters of the second filter group 22 or the angular ratio of the central angles of the multiple color filters of the second filter group 22.

In other words, the multiple color filters have areas or central angles unequal to each other in each of the first filter group and the second filter group. In addition, each of the multiple color filters of the first filter group has an area or a central angle equivalent to an area or a central angle of a corresponding one of the multiple color filters of the second filter group having an equivalent light transmittance to the each of the multiple color filters of the first filter group.

This configuration can increase the number of segments of color filters while reducing the spoke time to increase color purity.

The relationship among a color wheel, an incident light beam, and a spoke time will be described in detail below.

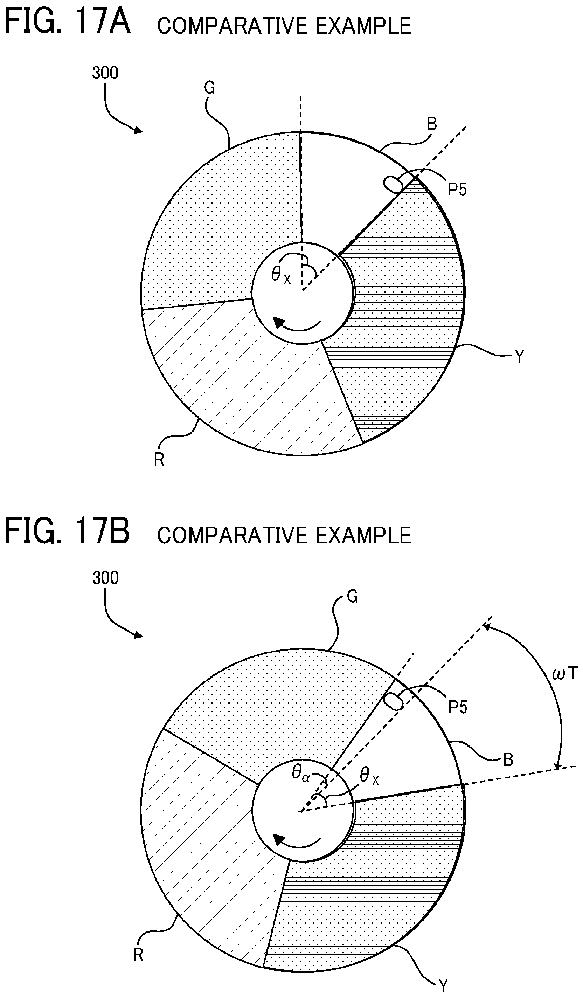

FIGS. 17A and 17B are diagrams illustrating a temporal change in a projection of an incident light beam, which is a light source spot beam, projected onto the color wheel 300 according to the comparative example illustrated in FIG. 6. In FIGS. 17A and 17B, the projection of light beam projected onto the color wheel 300 is illustrated as a fifth irradiation spot P5. FIGS. 17A and 17B illustrate the positional relationship of an incident light beam over a period of time from the start to the end of color processing for each color filter. For the color wheel 300, an incident light beam can be used for a period of time starting with a state illustrated in FIG. 17A and ending with a point in time illustrated in FIG. 17B. In the state illustrated in FIG. 17A, the entire fifth irradiation spot P5, which is a projection of incident light beam indicated by an ellipse, is completely within a specific color filter of the color wheel 300 (i.e., the blue region B in FIG. 17A). At the point in time illustrated in FIG. 17B, color processing for the blue region B, which is one color section, ends, and a portion of the fifth irradiation spot P5 reaches the boundary between the blue region B and another color section (i.e., the green region G in FIG. 17B). This period of time is referred to as an effective period.

As described above, the light source device 10 performs color processing for each filter within the effective period. During the effective period, color processing can be carried out for the corresponding color without mixing with another color. Accordingly, a longer effective period enables the expression of a color with greater brightness and better gradation characteristics.

The effective period refers to a time obtained by subtracting the time (spoke time) taken for the incident light beam to pass through a portion having an angle defined by the length of the incident light beam in the circumferential direction from the time corresponding to the central angle of the filter. In FIG. 17B, when an angular speed $\omega$ of the rotation of the color wheel 300 is a constant, the spoke time is the time taken for the fifth irradiation spot P5 indicated by a central angle $\theta_\alpha$ to pass through (scan) a spoke of the color wheel 300. In other words, a spoke time Ts is defined as $\theta_\alpha/\omega$.

An effective period T, which is a color processing time for the color wheel 300, can be expressed using a central angle $\theta_X$ of any color filter of the color wheel 300 and the spoke time Ts as follows.

$$\omega T = \theta_X - \theta_\alpha \qquad \text{Equation 1}$$

In other words, the effective period (color processing time) is defined as the filter angle (time) minus the spoke time (time). As is understood from Equation 1, the effective period is uniquely determined by each filter angle.

The effective period is set in the projection device 816 illustrated in FIG. 2 such that the effective period is long enough to perform sufficient color processing on the spatial light modulator. The effective period used for the processing is determined by each filter angle of the color wheel 300 of the projection device 816. Accordingly, a color wheel is preferably designed in consideration of the spoke time and the filter angle to determine the effective period.

In many cases, the angles of the color filters are not equal, and the angle of the filter for the blue region B, which is most likely to affect brightness among the three primary colors of light, is set to be the narrowest. As described above, by narrowing the angle of the filter of the blue region B, which has the least effect on brightness among the filters, the angle of the color filter of yellow (Y), green (G), or red (R) can be widened. As a result, the brightness and the color temperature of each color can be set more flexibly.

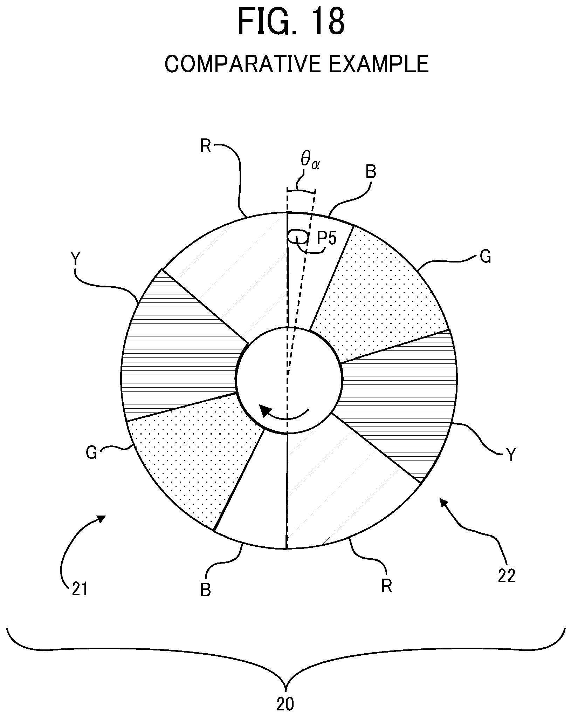

The color wheel 20 illustrated in FIG. 18 includes twice as many filters as the color wheel 300 illustrated in FIGS. 17A and 17B, with the total angle of filters for each color being equal to that of the color wheel 300, to achieve driving at an approximately double speed.

In other words, FIGS. 17A and 17B illustrate four color filters of the red region R, the blue region B, the green region G, and the yellow region Y. Meanwhile, FIG. 18 illustrates eight color filters including the first filter group 21 including the red region R, the blue region B, the green region G, and the yellow region Y and the second filter group 22 including the red region R, the blue region B, the green region G, and the yellow region Y.

Accordingly, by doubling the number of color filters per rotation of a color wheel while keeping the total angle of filters for each color unchanged, the transition of each color occurs twice per rotation. Thus, the double-speed driving of the color wheel can be easily achieved without increasing the rotation speed.

In the color wheel 20 illustrated in FIG. 18, the sum of the angles of color filters for each color in the first filter group 21 and the second filter group 22 coincides with the angle of the color filter for the corresponding color of the color wheel 300. In other words, the total angle of the color filters for each color per rotation is equal between the color wheels 20 and 300. However, when eight color filters are merely arranged as illustrated in FIG. 18, the spoke time is also doubled because the number of filters is increased to eight compared to FIGS. 17A and 17B. In addition, since the effective period described above is calculated for each color filter, the effective period for performing color processing for each color decreases.

As described above, by merely arranging eight color filters, double-speed driving can be easily achieved, but the spoke time is increased, which is undesirable for color processing, and the effective period is decreased accordingly. As a result, a color wheel with low color reproducibility is provided.

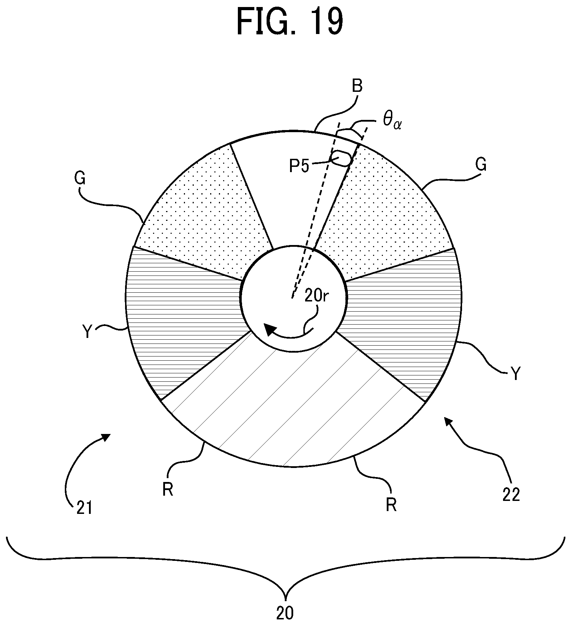

FIG. 19 illustrates a configuration of the color wheel 20 for addressing the issue described above. The color wheel 20 illustrated in FIG. 19 includes the first filter group 21 including the blue region B, the green region G, the yellow region Y, and the red region R arranged so as to transition in this order when the color wheel 20 rotates in the rotation direction 20r, and the second filter group 22 including the red region R, the yellow region Y, the green region G, and the blue region B arranged so as to transition in this order, which is opposite to that of the first filter group 21, when the color wheel 20 rotates in the rotation direction 20r.

With this configuration, no color transition occurs at the positions where the first filter group 21 and the second filter group 22 are adjacent to each other because no boundary line exists between the red regions R of the first filter group 21 and the second filter group 22 and no boundary line exists between the blue regions B of the first filter group 21 and the second filter group 22. Thus, there is no spoke time therebetween.

Accordingly, the effective period for performing color processing can be sufficiently obtained, and a color wheel that provides colors with high brightness and excellent gradation performance can be achieved.

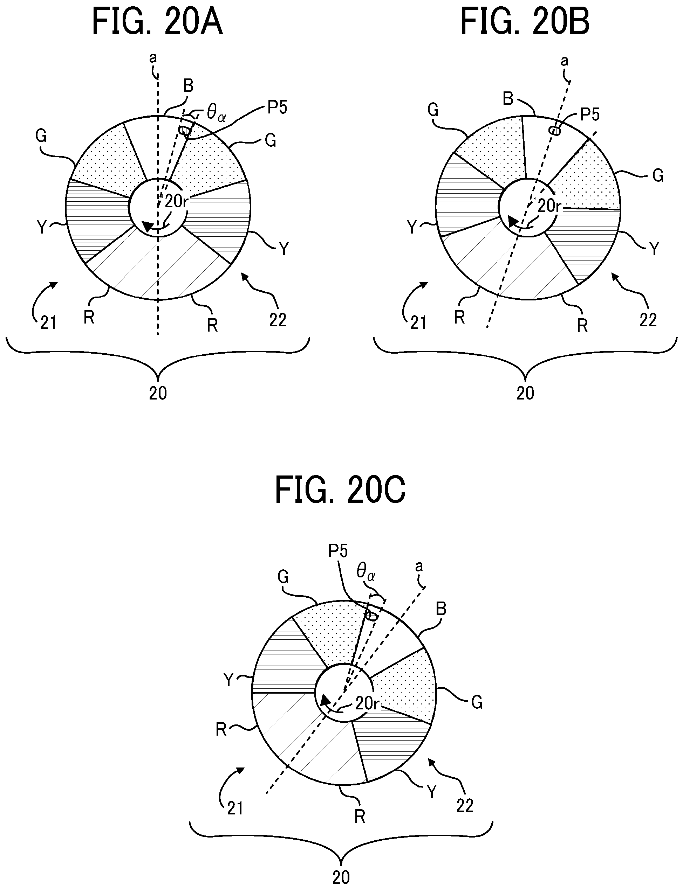

A specific operation with this configuration is illustrated in FIGS. 20A to 20C. In FIGS. 20A to 20C, a broken line "a" indicates a virtual filter boundary between the first filter group 21 and the second filter group 22 adjacent to each other.

In FIGS. 20A to 20C, the color wheel 20 rotates right as indicated by the rotation direction 20r, and color processing is performed on the filter of the blue region B within a period from the point in time illustrated in FIG. 20A, which is the start time of the effective period, to the point in time illustrated in FIG. 20C, which is the end time of the effective period. FIG. 20B illustrates a time at which the fifth irradiation spot P5 passes through the broken line "a," which represents the boundary line between the first filter group 21 and the second filter group 22, between the points in time illustrated in FIGS. 20A and 20C.

Although the processing for the first filter group 21 is different from that for the second filter group 22, at the time illustrated in FIG. 20B, the blue regions B in the first filter group 21 and the second filter group 22 are the same color or similar colors and are adjacent to each other, and the red regions R in the first filter group 21 and the second filter group 22 are the same color or similar colors and are adjacent to each other. Thus, each set of adjacent filters can perform color processing as one filter. Accordingly, the adjacent filters of the first filter group 21 and the second filter group 22 may be formed of one component.

With this configuration, no spoke time occurs at the time illustrated in FIG. 20B, and the effective period for performing color processing can be sufficiently obtained. Thus, a color wheel that provides colors with high brightness and excellent gradation performance can be achieved.

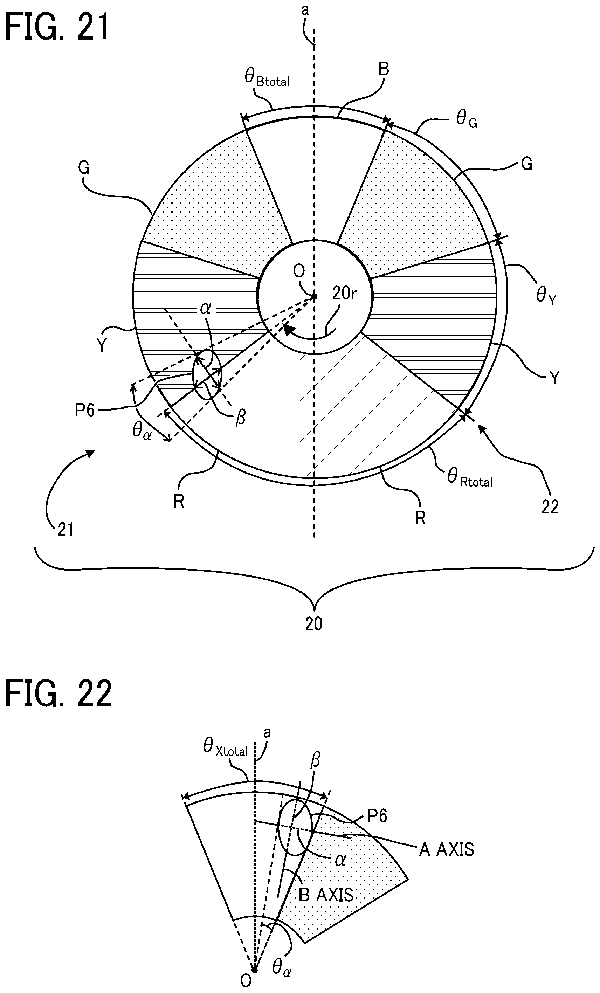

The size of a spot incident on a color filter and the central angle of a filter will further be described below. As illustrated in FIG. 21, the projection of an incident light beam incident on a color filter is schematically represented as a sixth irradiation spot P6.

The length of the sixth irradiation spot P6 in the circumferential direction of the color wheel 20 or the length of the sixth irradiation spot P6 in a direction in which a boundary line of color filters passes through (is scanned) is indicated by $\alpha$. The length $\alpha$ of the sixth irradiation spot P6 in the circumferential direction corresponds to the central angle $\theta_\alpha$. In other words, the central angle $\theta_\alpha$ is the maximum angle formed by lines passing through the sixth irradiation spot P6 when the lines are drawn radially from a rotation center O of the color wheel 20 to the sixth irradiation spot P6.

The central angle $\theta_\alpha$ smaller than central angles $\theta_R$, $\theta_B$, $\theta_G$, and $\theta_Y$ of the respective color filters can obtain a longer effective period. In contrast, when $\theta_X < \theta_\alpha$ is satisfied, where $\theta_X$ is the central angle of any color filter, as is apparent from Equation 1, no effective period is obtained.

In the red regions R where the first filter group 21 and the second filter group 22 are adjacent to each other, a total central angle $\theta_{Rtotal}$ of the red filter is calculated by substantially summing the central angles $\theta_R$ of the two red filters, namely, the red region R of the first filter group 21 and the red region R of the second filter group 22. In this case, the condition of $\theta_\alpha < \theta_R$, where $\theta_R$ is one of the central angles of the red regions R of the first filter group 21 and the second filter group 22, is insufficient because this condition may be satisfied by a configuration in which, for example, the sixth irradiation spot P6 contacts the broken line "a" at the same time the sixth irradiation spot P6 leaves a boundary line of color filters. As illustrated in FIGS. 21 and 22, for adjacent color filters, the effective period is achieved if the conditions of $\theta_\alpha < \theta_{Rtotal} = 2\theta_R$ and $\theta_\alpha < \theta_{Btotal} = 2\theta_B$ are satisfied.

As described above, for the red regions R and the blue regions B where the first filter group 21 and the second filter group 22 are adjacent to each other, the central angle $\theta_X$ of the color filters for each color is set to satisfy $\theta_\alpha < \theta_{Xtotal} = 2\theta_X$. In other words, the central angles $\theta_R$ and $\theta_B$, each of which is half of the total central angle of two adjacent color filters, are greater than or equal to half of the central angle $\theta_\alpha$ corresponding to the spot diameter of a light beam incident on the multiple color filters. In yet other words, the total central angles $\theta_{Rtotal}$ and $\theta_{Btotal}$ are greater than or equal to the central angle $\theta_\alpha$ corresponding to the spot diameter of a light beam incident on the multiple color filters.

With this configuration, a longer effective period can be obtained, and a color wheel that provides colors with high brightness and enriched gradation performance characteristics can be provided.

In FIG. 22, the length (spot diameter) of the sixth irradiation spot P6 in a direction orthogonal to the direction in which the boundary is scanned is indicated by $\beta$. The size $\beta$ is the spot diameter in a direction orthogonal to the scanning direction, and is the length of the sixth irradiation spot P6 in the radial direction of the color wheel 20. In FIG. 22, when the length of the sixth irradiation spot P6 in the circumferential direction is denoted by $\alpha$ and the length of the sixth irradiation spot P6 in the radial direction is denoted by $\beta$, $\beta > \alpha$ is satisfied.

When the lengths $\alpha$ and $\beta$ are different, i.e., in the case of anisotropy, the irradiation direction of the sixth irradiation spot P6 is preferably adjusted such that the length $\beta$ in the direction orthogonal to the direction in which the boundary of color filters is scanned is larger than the length $\alpha$ in the direction in which the boundary of color filters is scanned. The arrangement illustrated in FIG. 22 can reduce the time taken for the sixth irradiation spot P6 to pass through the boundary of color filters, and obtain a longer effective period with a shorter spoke time than the arrangement in which $\alpha > \beta$ is satisfied.

With this configuration, the effective period for performing color processing can be sufficiently obtained. Thus, a color wheel that provides colors with high brightness and excellent gradation performance can be achieved.

As described above, the relationship between the lengths $\alpha$ and $\beta$ is set to $\beta > \alpha$ to reduce the spoke time and increase the effective period. Since the relationship between the lengths $\alpha$ and $\beta$ is determined in accordance with the arrangement of a light source unit, the arrangement of the color wheel 20 may be restricted depending on the arrangement of the light source unit to satisfy the relationship of β > α.

For example, as illustrated in FIG. 12, the light source device 10 includes the light source 11, the wavelength converter 17, a circuit or an electronic board for driving the light source 11 and the wavelength converter 17, and a cooling fan in addition to the color wheel 20. Thus, depending on the arrangement of the color wheel 20 that satisfies β > α, the color wheel 20 may protrude more than the other components, resulting in an increase in the overall size of the light source device 10.

Accordingly, the relationship between the lengths α and β may be set to α > β to reduce the overall size of the light source device 10 in relation to the other components such as the light source 11 and the wavelength converter 17 of the light source device 10.

Even with the relationship of α > β, as illustrated in FIG. 22, the spoke time can be reduced by setting the total central angle $\theta_{Xtotal}$, which is the sum of the central angles of two adjacent color filters, to be greater than or equal to the central angle $\theta_{\alpha}$ corresponding to the spot diameter of a light beam incident on the multiple color filters.

As described above, the spoke time can be reduced, the effective period can be increased regardless of the relationship between the lengths α and β of a spot.

A combined spot formed by two spots from the first light source unit Md1 and the second light source unit Md2 is described above, but a spot may be obtained by a single light source unit. The spot may have any shape regardless of whether the spot is a single spot or a combined spot obtained by two or more light source units. In other words, regardless of the shape, such as an ellipse, a circle, or a rectangle, the configuration of the color wheel described above is effective in reducing the spoke time.

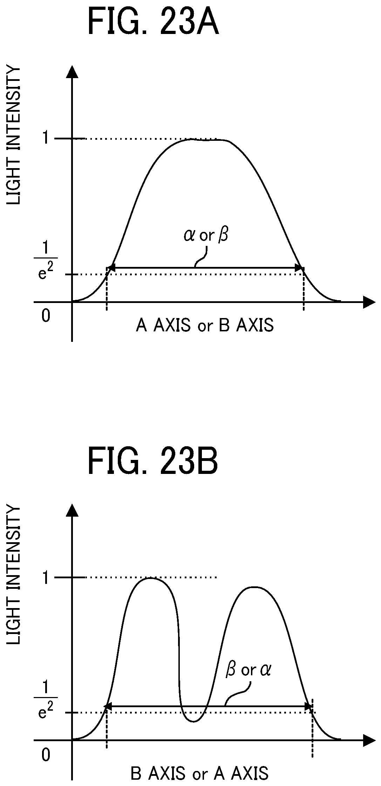

For example, as a typical method for measuring the size of a beam spot, as illustrated in FIG. 23A, the lengths α and β may be determined by using, as the spot diameter, the width of the foot of graph with a light intensity of $1/e^2$ when the highest light intensity is set to 1.

When multiple spots of incident light beams are arranged side by side along the circumference of the color wheel 20 with the configuration illustrated in, for example, FIGS. 15 and 16, an intensity distribution having a valley may be obtained, as illustrated in FIG. 23B. The valley may temporarily have a light intensity of less than $1/e^2$.

Accordingly, when multiple spots of incident light beams are arranged, even if there is a location with a light intensity of less than $1/e^2$ between the incident light beams, as illustrated in FIG. 23B, the distance between two farthest points among multiple locations where the normalized light intensity is less than $1/e^2$ may be used as the "spot diameter."

By defining the spot diameter in this way, even when multiple light source spot beams are incident on the color wheel 20, the spot diameter is determined from the overall size of the multiple incident light beams, regardless of the position of each individual incident light beam. This configuration can appropriately adjust the positions of incident light beams while maintaining the effect of reducing the spoke time, even when the positions of the incident light beams are away from each other to some extent. Thus, a color wheel that provides colors with high brightness and enriched gradation performance characteristics can be provided.

Aspects of the present disclosure are, for example, as follows.

Aspect 1

A color wheel 20 includes a first filter group 21 including multiple color filters having different light transmittances, and a second filter group 22 including multiple color filters having different light transmittances. The first filter group 21 and the second filter group 22 are arranged such that the multiple color filters of the first filter group 21 and the multiple color filters of the second filter group 22 are arranged side by side in a circumferential direction of the color wheel.

The first filter group 21 and the second filter group 22 are arranged such that color filters having the same or similar light transmittances among the multiple color filters of the first filter group 21 and the multiple color filters of the second filter group 22 are adjacent to each other in at least one location.

Among the multiple color filters of the first filter group 21 and the multiple color filters of the second filter group 22, color filters of different colors are set to have unequal areas or central angles, and an area ratio of the multiple color filters of the first filter group 21 or an angular ratio of the central angles of the multiple color filters of the first filter group 21 is substantially equal to an area ratio of the multiple color filters of the second filter group 22 or an angular ratio of the central angles of the multiple color filters of the second filter group 22.

As used herein, the phrase "angular ratios being substantially equal to each other" means that the difference between the central angle of a certain color filter in the first filter group 21 and the central angle of a corresponding color filter in the second filter group 22 is within ±5 degrees.

In other words, a color wheel includes a first filter group and a second filter group. The first filter group includes first multiple color filters having different light transmittances. The second filter group includes second multiple color filters having light transmittances equivalent to the different light transmittances of the first multiple color filters of the first filter group, respectively. The first multiple color filters of the first filter group and the second multiple color filters of the second filter group are arranged in a circumferential direction of the color wheel.

The first multiple color filters of the first filter group include a first color filter having a first light transmittance. The second multiple color filters of the second filter group include a second color filter having a second light transmittance equivalent to the first light transmittance. The first color filter is adjacent to the second color filter on the color wheel in the circumferential direction. The first multiple color filters have first areas or first central angles unequal to each other in the first filter group. The second multiple color filters have second areas or second central angles unequal to each other in the second filter group. The second areas or the second central angles are respectively equivalent to the first areas or the first central angles of the first multiple color filters of the first filter group.

This configuration can increase the number of segments of color filters while reducing the spoke time to increase color purity.

Aspect 2

In the color wheel 20 of Aspect 1, a total central angle of the adjacent color filters is greater than or equal to twice a central angle corresponding to a spot diameter of a light beam incident on the multiple color filters of the first filter group 21 and the multiple color filters of the second filter group 22.

In other words, in the light source device according to Aspect 11, a total central angle of the first color filter and the second color filter is equal to or greater than a central angle corresponding to a diameter of the spot of the light beam incident on the color wheel.

With this configuration, a longer effective period can be obtained, and a color wheel that provides colors with high brightness and enriched gradation performance characteristics can be provided.

Aspect 3

In the color wheel 20 of Aspects 1 and 2, the spot diameter is defined by a length $\alpha$ of a projection of the light beam in a direction in which a boundary between the adjacent color filters is scanned.

In other words, in the light source device according to Aspect 2 or 11, the light source projects the spot, having a spot diameter defined by a length of the spot of the light beam on the color wheel in the circumferential direction.

With this configuration, the spoke time of a light beam incident on the color wheel 20 can be reduced, and a longer effective period can be obtained. A color wheel that provides colors with high brightness and enriched gradation performance characteristics can be provided.

Aspect 4

In the color wheel 20 of any one of Aspects 1 to 3, $\beta > \alpha$ is satisfied, where $\alpha$ is a length of a projection of a light beam incident on the multiple color filters of the first filter group 21 and the multiple color filters of the second filter group 22 in a direction in which a boundary between the adjacent color filters is scanned, and $\beta$ is a length of the projection of the light beam in a direction orthogonal to the direction in which the boundary between the adjacent color filters is scanned.

In other words, in the light source device according to Aspect 2, 3, or 11, the spot of the light beam has a first length in the circumferential direction and a second length in a radial direction orthogonal to the circumferential direction. The second length is longer than the first length.

With this configuration, the spoke time of a light beam incident on the color wheel 20 can further be reduced, and a longer effective period can be obtained. A color wheel that provides colors with high brightness and enriched gradation performance characteristics can be provided.

Aspect 5

In the color wheel 20 of any one of Aspects 1 to 3, $\alpha > \beta$ is satisfied, where $\alpha$ is a length of a projection of a light beam incident on the multiple color filters of the first filter group 21 and the multiple color filters of the second filter group 22 in a direction in which a boundary between the adjacent color filters is scanned, and $\beta$ is a length of the projection of the light beam in a direction orthogonal to the direction in which the boundary between the adjacent color filters is scanned.

In other words, in the light source device according to Aspect 2, 3, or 11, the spot of the light beam has a first length in the circumferential direction and a second length in a radial direction orthogonal to the circumferential direction. The second length is shorter than the first length.

This configuration contributes to a reduction in the overall size of the light source device 10 without changing the shape of a spot of a light beam incident on the color wheel 20 in the light source device 10, and can obtain a longer effective period while reducing the spoke time. Thus, a color wheel that provides colors with high brightness and enriched gradation performance characteristics can be provided.

Aspect 6

In the color wheel 20 of any one of Aspects 1 to 5, two or more incident light beams are incident on the multiple color filters of the first filter group 21 and the multiple color filters of the second filter group 22.

In other words, in the light source device according to Aspect 8, the spot of the light beam and said another spot of said another light beam forms a combined spot on the color wheel.

This configuration can reduce the spoke time to increase color purity even when multiple light source units, such as the first light source unit Md1 and the second light source unit Md2, are used and multiple incident light beams are used.

Aspect 7

In the color wheel 20 of any one of Aspects 1 to 3 or Aspect 5, a virtual ellipse formed to encompass two or more incident light beams on the multiple color filters of the first filter group 21 and the multiple color filters of the second filter group 22 has a major axis directed in a direction substantially parallel to the circumferential direction of the color wheel 20.

In other words, in the light source device according to Aspect 6, the combined spot forms an imaginary ellipse having a major axis extending in the circumferential direction of the color wheel.

This configuration can increase color purity without increasing the spoke time even in an arrangement that is likely to cause an increase in spoke time, such as an arrangement in which the irradiation spots P31 and P32 of the two incident light beams are arranged side by side along the circumferential direction.

Aspect 8

In the color wheel 20 of any one of Aspects 1 to 7, two or more incident light beams are generated from different light sources.

In other words, in the light source device according to Aspect 2 or 11, further comprising another light source to emit another light beam onto the color wheel to project another spot of said another light beam on the color wheel.

This configuration can increase color purity without increasing the spoke time even in the presence of the irradiation spots P31 and P32 of the two incident light beams.

Aspect 9

In the color wheel 20 of any one of Aspects 1 to 8, among the multiple color filters of the first filter group 21 and the multiple color filters of the second filter group 22, the adjacent color filters have the same light transmittances and are constructed as one component.

In other words, in the color wheel according to Aspect 1, the first color filter and the second color filter, adjacent to the first color filter in the circumferential direction, are formed of one component in the color wheel.

With this configuration, for example, no color transitioning portion is generated between, for example, the adjacent blue regions B in the first filter group 21 and the second filter group 22, thus achieving a further reduction in spoke time. In addition, the adjacent blue regions B in the first filter group 21 and the second filter group 22 can be generated as the same component, thus achieving a reduction in the number of man-hours involved in production and the number of components involved, leading to cost reduction.

Aspect 10

In the color wheel 20 of any one of Aspects 1 to 9, a direction in which an irradiation spots P3 are arranged extends along a long side of an opening of a light tunnel 3 having a rectangular shape with the long side and a short side. The light tunnel 3 is provided downstream of the color wheel 20.

In other words, the light source device according to Aspect 7, further includes a light mixing tunnel downstream of the color wheel in a direction of the light beam. The light mixing tunnel has an entrance into which the light beam and said another light beam are incident. The entrance has a rectangular shape having long sides and short sides. The long sides extend parallel to the major axis.

This configuration can prevent an unnecessary increase in spoke time even when multiple light source units, namely, the first light source unit Md1 and the second light source unit Md2, are used.

Aspect 11

A light source device 10 includes the color wheel 20 of any one of Aspects 1 to 10.

In other words, A light source device includes the color wheel according to claim 1 and a light source to emit a light beam onto the color wheel to project a spot of the light beam on the color wheel.

With this configuration, the illuminance of the illumination light beam emitted from the light source device 10 can be kept uniform, and light having a short spoke time and high color purity can be obtained.

Aspect 12

An image projection apparatus 100 includes a light source unit including the color wheel 20 of any one of Aspects 1 to 10, and a projection optical system 103. The projection optical system 103 irradiates a DMD 101 with light source light emitted from the light source unit and enlarges and projects a modulated image.

In other words, a projection apparatus includes the light source device according to any one of Aspects 2 to 8, 10, and 11, a two-dimensional light modulator to modulate the light beam emitted from the light source device, and a projection optical system to enlarges and projects the light beam modulated by the two-dimensional light modulator.

With this configuration, the illuminance of the illumination light beam emitted from the light tunnel 3 can be kept uniform, and light having a short spoke time and high color purity can be obtained.

**Claims**

1. A color wheel (20) comprising:

   a first filter group (21) including first multiple color filters having different light transmittances; and
   a second filter group (22) including second multiple color filters having light transmittances equivalent to the different light transmittances of the first multiple color filters of the first filter group (21), respectively,
   wherein the first multiple color filters of the first filter group (21) and the second multiple color filters of the second filter group (22) are arranged in a circumferential direction of the color wheel (20),
   the first multiple color filters of the first filter group (21) include a first color filter having a first light transmittance,
   the second multiple color filters of the second filter group (22) include a second color filter having a second light transmittance equivalent to the first light transmittance,
   the first color filter is adjacent to the second color filter on the color wheel (20) in the circumferential direction,
   the first multiple color filters have first areas or first central angles unequal to each other in the first filter group (21),
   the second multiple color filters have second areas or second central angles unequal to each other in the second filter group (22), and
   the second areas or the second central angles are respectively equivalent to the first areas or the first central angles of the first multiple color filters of the first filter group (21).

2. The color wheel (20) according to claim 1, wherein the first color filter and the second color filter, adjacent to the first color filter in the circumferential direction, are formed of one component in the color wheel (20).

3. A light source device (10) comprising:

   the color wheel (20) according to claim 1 or 2; and
   a light source (11) to emit a light beam onto the color wheel (20) to project a spot of the light beam on the color wheel (20).

4. The light source device (10) according to claim 3, wherein a total central angle of the first color filter and the second color filter is equal to or greater than a central angle corresponding to a diameter of the spot of the light beam incident on the color wheel (20).

5. The light source device (10) according to claim 3 or 4, wherein the light source (11) projects the spot, having a spot diameter defined by a length of the spot of the light beam on the color wheel (20) in the circumferential direction.

6. The light source device (10) according to any one of claims 3 to 5,
   wherein the spot of the light beam has:

   a first length in the circumferential direction; and
   a second length in a radial direction orthogonal to the circumferential direction, the second length longer than the first length.

7. The light source device (10) according to any one of claims 3 to 5,
   wherein the spot of the light beam has:

   a first length in the circumferential direction; and
   a second length in a radial direction orthogonal to the circumferential direction, the second length shorter than the first length.

8. The light source device (10) according to claim 3 or 4, further comprising another light source to emit another light beam onto the color wheel (20) to project another spot of said another light beam on the color wheel (20).

9. The light source device (10) according to claim 8, wherein the spot of the light beam and said another spot of said another light beam forms a combined spot on the color wheel (20).

10. The light source device (10) according to claim 9, wherein the combined spot forms an imaginary ellipse having a major axis extending in the circumferential direction of the color wheel (20).

11. The light source device (10) according to claim 10, further comprising a light mixing tunnel (3) downstream of the color wheel (20) in a direction of the light beam,

    wherein the light mixing tunnel (3) has an entrance into which the light beam and said another light beam are incident,
    the entrance has a rectangular shape having long sides and short sides, and
    the long sides extend parallel to the major axis.

12. A projection apparatus (100) comprising:

    the light source device (10) according to any one of claims 3 to 11;
    a two-dimensional light modulator (101) to modulate the light beam emitted from the light source device (10); and
a projection optical system (103) to enlarges and projects the light beam modulated by the two-dimensional light modulator (101).

# FIG. 1

# FIG. 2

IMAGE PROJECTION APPARATUS — 100

| COOLING FAN — 820 | | LIGHT SOURCE — 11 | → | PROJECTION DEVICE — 816 | → | PROJECTION LENS — 817 |

- EXTERNAL DEVICE CONNECTION I/F — 818
- FAN DRIVE CIRCUIT — 819
- LASER DIODE DRIVE CIRCUIT — 814

810

- CPU — 801
- ROM — 802
- RAM — 803
- MEDIA I/F — 807
- OPERATION UNIT — 808
- POWER SWITCH — 809
- NETWORK I/F — 811

MEDIA — 806

EP 4 657 154 A1

# FIG. 3

# FIG. 4

# FIG. 5

# FIG. 6
## COMPARATIVE EXAMPLE

300

G

B

Y

R

# FIG. 7

G

P2

Y

21

# FIG. 8

# FIG. 9

# FIG. 10

# FIG. 11

# FIG. 12

# FIG. 13

# FIG. 14

# FIG. 15

EP 4 657 154 A1

# FIG. 16

# FIG. 17A    COMPARATIVE EXAMPLE

300

G

B

P5

$\theta_X$

R

Y

# FIG. 17B    COMPARATIVE EXAMPLE

300

G

$\omega T$

P5

$\theta_\alpha$    $\theta_X$

B

R

Y

# FIG. 18

## COMPARATIVE EXAMPLE

# FIG. 19

# FIG. 20A

# FIG. 20B

# FIG. 20C

# FIG. 21

# FIG. 22

# FIG. 23A

# FIG. 23B

Europäisches
Patentamt

European
Patent Office

Office européen
des brevets

# EUROPEAN SEARCH REPORT

**Application Number**

EP 25 17 8178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2019/179133 A1 (WU MENG-YU [TW] ET AL) 13 June 2019 (2019-06-13) | 1-3,12 | INV. G03B21/20 |
| Y | * paragraphs [0001] - [0003], [0014] - [0017]; figures 1, 7 * | 4-11 | G03B33/08 G02B26/00 H04N9/31 |
| | ----- | | |
| X | KR 2008 0025878 A (LG ELECTRONICS INC [KR]) 24 March 2008 (2008-03-24) | 1-6,12 | |
| Y | * pages 2-3; figures 3, 4 * | 4-11 | |
| | ----- | | |
| Y | US 6 467 910 B1 (SATO YOSHIHISA [JP]) 22 October 2002 (2002-10-22) * column 8, lines 22-37; figure 27A * | 4-7,10 | |
| | ----- | | |
| Y | US 8 851 684 B2 (ISHIKURA NAOFUMI [JP]; NEC DISPLAY SOLUTIONS LTD [JP]) 7 October 2014 (2014-10-07) * figures 2A, 2D * * column 2, lines 33-52 * * column 3, lines 16-22 * | 8-10 | |
| | ----- | | |
| Y | US 8 434 876 B2 (KOJIMA KUNIKO [JP]; KIDA HIROSHI [JP]; MITSUBISHI ELECTRIC CORP [JP]) 7 May 2013 (2013-05-07) * column 5, lines 37-65; figure 2C * | 8-11 | **TECHNICAL FIELDS SEARCHED (IPC)** G03B H04N G02B |
| | ----- | | |

The present search report has been drawn up for all claims

| Place of search | Date of completion of the search | Examiner |
|---|---|---|
| Munich | 10 October 2025 | Rückerl, Ralph |

EPO FORM 1503 03.82 (P04C01)

## ANNEX TO THE EUROPEAN SEARCH REPORT
## ON EUROPEAN PATENT APPLICATION NO.

EP 25 17 8178

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2025

| Patent document cited in search report | Publication date | Patent family member(s) | Publication date |
|---|---|---|---|
| US 2019179133 A1 | 13-06-2019 | CN 107817644 A | 20-03-2018 |
| | | US 2019179133 A1 | 13-06-2019 |
| KR 20080025878 A | 24-03-2008 | NONE | |
| US 6467910 B1 | 22-10-2002 | EP 1063852 A2 | 27-12-2000 |
| | | US 6467910 B1 | 22-10-2002 |
| US 8851684 B2 | 07-10-2014 | JP 4953149 B2 | 13-06-2012 |
| | | JP WO2010146683 A1 | 29-11-2012 |
| | | US 2012075592 A1 | 29-03-2012 |
| | | WO 2010146683 A1 | 23-12-2010 |
| US 8434876 B2 | 07-05-2013 | CN 102171610 A | 31-08-2011 |
| | | EP 2357526 A1 | 17-08-2011 |
| | | JP 4516622 B2 | 04-08-2010 |
| | | JP 2010160454 A | 22-07-2010 |
| | | KR 20110076974 A | 06-07-2011 |
| | | TW 201022825 A | 16-06-2010 |
| | | US 2011043763 A1 | 24-02-2011 |
| | | WO 2010067504 A1 | 17-06-2010 |

EPO FORM P0459

For more details about this annex : see Official Journal of the European Patent Office, No. 12/82

**REFERENCES CITED IN THE DESCRIPTION**

**Patent documents cited in the description**

- JP 2023099536 A
- JP 6205835 B
- JP 4281385 B
- US 10634901 B